# EUROPEAN PATENT SPECIFICATION

(11) **EP 0 880 886 B1**
(45) Date of publication and mention of the grant of the patent: **29.01.2003**
(21) Application number: 98201492.0
(22) Date of filing: 07.05.1998
(51) Int. Cl.: A01F 15/00, A01F 15/14, A01D 85/00

(54) **Bale**
Ballen
Balle

(30) Priority: 31.05.1997 GB 9711168
(43) Date of publication of application: 02.12.1998
(73) Proprietor: Holden, S.A.J., Tealby, Lincoln (GB); Holden, M.C., Tealby, Lincoln (GB)
(72) Inventor: Holden, S.A.J., Tealby, Lincoln (GB)
(74) Representative: Wharton, Peter Robert

(56) References cited:
- EP-A- 0 416 215
- EP-A- 0 429 798
- DE-A- 19 520 751

## Description

This invention relates to a method and apparatus of producing a bale of straw or the like material and in particular relates to a method and apparatus for producing a segmented bale.

Straw, hay and the like materials have traditionally been compressed and tied with twine, wire and so on to form bales for ease of transport and storage. In recent years the trend has been towards the production of larger bales as this is more economic. For example, a standard bale might have the dimensions 245cm x 86cm x 79cm (8' x 2'10" x 2'7"), and will weigh in the order of 254 Kg (5 cwt). However, as far as users are concerned, such bales are often too large to be handled easily without machinery, and many would prefer much smaller bales, e.g. 25 Kg (half hundredweight), which can be handled manually.

DE-A-19529751 discloses an arrangement for producing large bales bound in the traditional manner and a plurality of smaller bales being bound inside the large bale.

The present invention seeks to provide a method and apparatus which enables large bales to be made by the producer but which can be simply split into smaller bales by the end user.

According to the present invention there is provided a method of producing a bale which comprises taking a large bale, putting said bale on a conveyor, pushing binding material through said bale at pre-set intervals and knotting the binding material.

The bale so produced will have the original binding of the large bale and will be transported as such. However, a user can cut the bindings holding the large bale together, when the bale will then split into segments held by the additional binding supplied by the method of the invention.

The invention further provides an apparatus to carry out the method of the invention which comprises a conveyor onto which a bale is placed, a sensor for determining the position of the bale, needles in conjunction with ram means to pass binding through the bale at predetermined intervals and knotting means for tying the bindings in place.

The invention further extends to a bale which in addition to conventional bale binding contains extra bindings dividing the bale into segments.

The binding may be any traditional bale-binding material, such twine, wire and the like.

Bales are normally formed by curved, not straight, needles passing around the end of whatever is to be baled, not through it. The needles in the apparatus of the present invention are straight so that they do not pass through any of the 30 or 40 flakes of which the original bale is made. If they were to be curved it would be much harder or indeed impossible to penetrate the bale. If it were possible to penetrate the bale in this way, curved needles would pass in an arc through the top and bottom of maybe three or four flakes. The end result would be that the segments would be difficult or almost impossible to part from the original bale, rendering the process useless.

Using straight needles in the process of the invention is therefore important, but this creates a problem in that they will not themselves be able to pass through the knotter carrying the twine with them as curved ones would.

To overcome this problem the tying operation may be in two parts: the first part involves the straight needles pushing, or pulling, the twine through the bale, at this point the twine will be presented close to the knotters, not passed through them as normal; the second operation is to collect the twine from the needle and pass it through the knotter using another smaller and curved needle travelling in the horizontal plane, or alternatively an arm may reach through the knotters from behind and pull the twine through.

The invention will be described further, by way of example, with reference to the accompanying drawings, in which:
Figure 1 is a diagrammatic perspective view of a current standard large bale;
Figure 2 is a similar view to Figure 1 of a bale in accordance with the invention;
Figure 3 is a diagrammatic side view of an apparatus in accordance with the invention; and
Figure 4 is an end view corresponding to Figure 3.

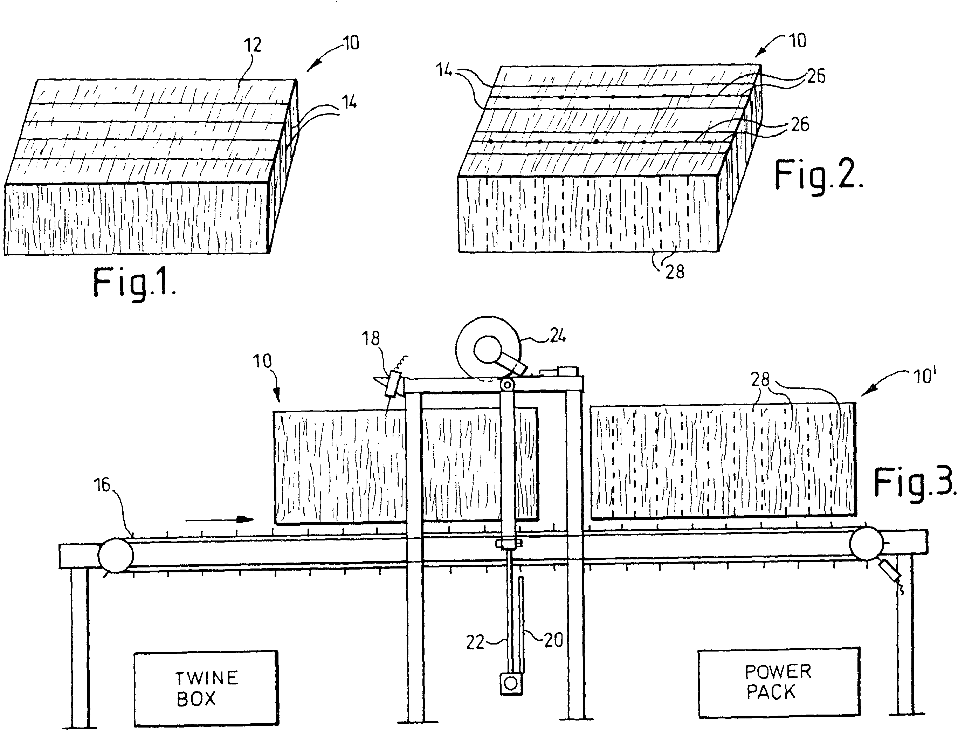

Referring to the drawings, and in particular Figure 1, a standard bale generally designated 10 comprises straw or the like 12 which has been compressed and bound by a bale-binding material 14 such as twine, wire or the like in accordance with normal practice.

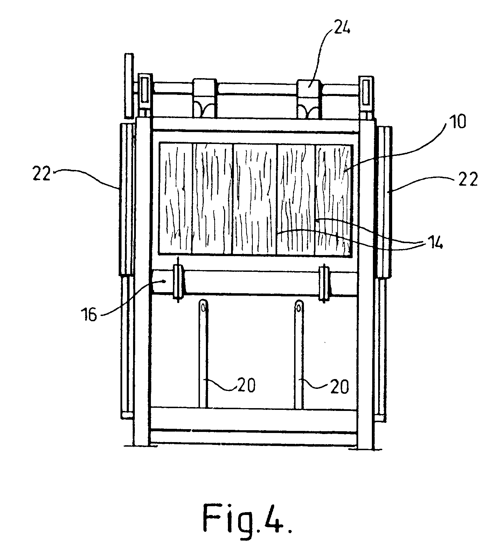

Referring now to Figures 3 and 4, it can be seen that a standard bale 10 is placed on a conveyor 16 which conveys the bale horizontally toward a needle and knotter mechanism which will be described more fully hereinafter. A sensor 18 detects the bale 10 and, through a suitable control mechanism (not shown), causes the conveyor to move the bale 10 a pre-set distance to the right (as viewed in Figure 3).

Below the conveyor 16 is located a pair of straight needles 20, each mounted on a ram mechanism 22. The needles 20 carry baling twine, wire, or the like binding material 26. The binding material 26 may be the same as or different from the twine 14 and in particular may be of a different colour so as to be easily distinguishable. Above the needles are located knotters 24. These are mechanisms known per se which are capable of forming a knot in baling twine or the like.

In operation the conveyor 16 moves the bale 10 towards the knotter/needle mechanism. The sensor 18 detects the leading edge of the bale 10 and, through the control mechanism, the conveyor 16 is moved a predetermined further distance to the right (as viewed in Figure 3) after which the conveyor stops momentarily. At this point the rams 22 are actuated and the needles 20 pushed up through the bale 10 carrying baling twine with them to the knotters 24 which knot the twine 26. The rams 22 then extend, retracting the needles 20, after which the conveyor is moved a further pre-set amount and the operation repeated. For example, in a standard bale, the operation may be repeated nine times, dividing the bale into ten segments. The bale 10' so produced is illustrated in Figure 2 where it will be seen that, in addition to the original baling twine 14 holding the bale as a whole together, ten segments are produced by means of the additional twine 26. A user can simply cut the twine 14, and the large bale will divide into 10 smaller bales 28.

While the invention has been described with reference to a standard bale, generally called a Mini Hesston bale, the apparatus of the invention is not limited to bales of any given dimensions. The conveyor height may be made adjustable to accommodate bales of different depth, and the sides may also be adjustable to cope with different widths. The length of segment can be varied by adjusting the control mechanism.
Furthermore, the tying mechanism and needles can be adjusted for width so that the re-tying of the twine 26 occurs within the outer bindings 14.

Furthermore, although the invention has been described as a stand alone machine to accept all ready formed large bales, it will be appreciated that it could be incorporated as part of the original baler mechanism so that the complete segmented bale is formed at one pass.

## Claims

1. A method of producing a bale which comprises taking a large bale(10), putting said bale (10) on a conveyor (16), pushing binding material (26) through said bale (10) at pre-set intervals and knotting the binding material.

2. A method as claimed in claim 1 wherein the bale has both the original binding (14) of the large bale and the binding (26) at pre-set intervals.

3. A method as claimed in either of claims 1 or 2 in which the binding (14, 26) is twine, wire or the like.

4. A method as claimed in any of claims 1 to 3 in which the knotting operation is in two parts: the first part involves straight needles (20) pushing, or pulling, the binding (26) through the bale and presenting it close to knotters (24); the second operation is to collect the twine from the needles and pass it through the knotters (24) using another smaller and curved needle travelling in the horizontal plane.

5. A method as claimed in claim 4 in which the second operation is carried out with an arm which reaches through the knotters from behind to pull the binding through.

6. An apparatus to carry out the method of claim 1 which comprises a conveyor (16) onto which a bale (10) is placed, a sensor (18) for determining the position of the bale, needles (20) in conjunction with ram means (22) to pass binding (26) through the bale at predetermined intervals and knotting means (24) for tying the bindings in place.

7. An apparatus as claimed in claim 6 in which the needles (20) are straight so that they do not pass through any of the 30 or 40 flakes of which the original bale is made.

## Patentansprüche

1. Verfahren zum Herstellen eines Ballens, das folgende Schritte aufweist:
es wird ein großer Ballen (10) hergenommen, der Ballen (10) wird auf einen Förderer (16) gesetzt, ein Bindematerial (26) wird in vorgegebenen Intervallen durch den Ballen (10) gedrückt, und das Bindematerial wird verknotet.

2. Verfahren nach Anspruch 1,
wobei der Ballen sowohl das ursprüngliche Bindematerial (14) des großen Ballens als auch das Bindematerial (26) in vorgegebenen Intervallen aufweist.

3. Verfahren nach Anspruch 1 oder 2,
wobei das Bindematerial (14, 26) Maschinengarn, Draht oder dergleichen ist.

4. Verfahren nach einem der Ansprüche 1 bis 3,
wobei der Verknotungsvorgang in zwei Teilen abläuft:
der erste Teil impliziert, daß gerade Nadeln (20) das Bindematerial (26) durch den Ballen drücken oder ziehen und es in der Nähe von Verknotungseinrichtungen (24) bereitstellen; der zweite Schritt besteht darin, das Maschinengarn von den Nadeln zu sammeln und es durch die Verknotungseinrichtungen (24) zu führen, wobei eine weitere kleinere und gekrümmte Nadel verwendet wird, die sich in der horizontalen Ebene bewegt.

5. Verfahren nach Anspruch 4,
wobei der zweite Schritt mit einem Arm durchgeführt wird, der von hinten durch die Verknotungseinrichtungen reicht, um das Bindematerial hindurchzuziehen.

6. Vorrichtung zur Durchführung des Verfahrens gemäß Anspruch 1,
der folgendes aufweist:
einen Förderer (16), auf welchem ein Ballen (10) plaziert wird,
einen Sensor (18), um die Position des Ballens zu bestimmen,
Nadeln (20) in Verbindung mit Kolbeneinrichtungen (22), um ein Bindematerial (26) in vorgegebenen Intervallen durch den Ballen hindurchzuführen, und
Verknotungseinrichtungen (24), um die Bindematerialien in ihrer Position festzuziehen.

7. Vorrichtung nach Anspruch 6,
wobei die Nadeln (20) gerade sind, so daß sie nicht durch irgendwelche der 30 oder 40 Flakes hindurchgehen, aus denen der ursprüngliche Ballen besteht.

## Revendications

1. Procédé de production d'une balle qui comprend le fait de prendre une grande balle (10), mettre ladite balle (10) sur un transporteur (16), pousser du matériau de liaison (26) à travers ladite balle (10) à des intervalles prédéterminés et nouer le matériau de liaison.

2. Procédé selon la revendication 1, dans lequel la balle possède à la fois le lien d'origine (14) de la grande balle et le lien (26) à intervalles prédéterminés.

3. Procédé selon l'une ou l'autre des revendications 1 ou 2, dans lequel le lien (24, 26) est de la ficelle, du fil métallique ou similaire.

4. Procédé selon l'une quelconque de revendications 1 à 3, dans lequel l'opération de nouage se déroule en deux étapes : la première étape implique des aiguilles droites (20) poussant ou tirant le lien (26) à travers la balle et le présentant à proximité de noueurs (24) ; la seconde étape consiste à collecter la ficelle depuis les aiguilles et la passer à travers les noueurs (24) en utilisant une autre aiguille incurvée plus petite se déplaçant dans le plan horizontal.

5. Procédé selon la revendication 4, dans lequel la seconde étape est réalisée à l'aide d'un bras qui atteint les noueurs en les traversant depuis l'arrière pour tirer le lien à travers.

6. Appareil pour mettre en oeuvre le procédé selon la revendication 1, qui comprend un transporteur (16) sur lequel une balle (10) est placée, un capteur (18) pour déterminer la position de la balle, des aiguilles (20) associées à des moyens formanf coulisseau (22) pour passer le lien (26) à travers la balle à intervalles prédéterminés et des moyens de nouage (24) pour nouer les liens en place.

7. Appareil selon la revendication 6, dans lequel les aiguilles (20) sont droites de sorte qu'elles ne passent à travers aucune des 30 ou 40 couches constituant la balle d'origine.
